# EUROPÄISCHE PATENTSCHRIFT

(11) **EP 2 599 617 B1**
(45) Veröffentlichungstag und Bekanntmachung des Hinweises auf die Patenterteilung: **28.06.2017**
(21) Anmeldenummer: 13152379.7
(22) Anmeldetag: 30.11.2010
(51) Int. Cl.: B29C 65/00, B29C 65/10, B31B 70/36, B31B 70/64

(54) **Verfahren und Maschine zur Herstellung eines Pinchsackes**
Method and machine for manufacturing a pinch sack
Procédé et dispositif de fabrication d'une ensacheuse de type Pinch

(30) Priorität: 30.11.2009 DE 102009056078
(43) Veröffentlichungstag der Anmeldung: 05.06.2013
(62) Teilanmeldung aus: 10795215.2
(73) Patentinhaber: Windmöller & Hölscher KG, 49525 Lengerich (DE)
(72) Erfinder: Köhn, Uwe, 49078 Osnabrück (DE); Staat, Andreas, 49536 Lienen (DE); Bannister, Roger, Bowling Green, KY Kentucky 42103 (US)

(56) Entgegenhaltungen:
- EP-A1- 2 117 821
- WO-A1-01/05671
- WO-A1-2006/125585
- US-A- 4 274 896
- US-A- 4 373 979
- US-A- 4 610 651

## Beschreibung

Die Erfindung betrifft ein Verfahren zur Herstellung eines Pinchsackes, eine Station zur Bildung von Pinchböden sowie eine Vorrichtung zur Herstellung von Pinchbodensäcken. Die vorgenannten Gegenstände sind in den Oberbegriffen der Ansprüche 1, 4 und 13 definiert.

Pinchsäcke sind bekannt. Wie alle gebräuchlichen Säcke weisen sie einen Sackkörper auf, der im Wesentlichen aus einem Schlauchkörper besteht beziehungsweise ein solcher ist. Die Pinchsäcke weisen zumindest einen Pinchboden auf, der ein Ende des Sackkörpers verschließt. Er kommt zustande, indem ein Ende des Schlauchstückes meist entlang einer Faltlinie umgeklappt und an der Sackwandung festgelegt wird. Nach dem Stand der Technik sind Pinchsäcke aus Papier bekannt. Sie sind einfach per Hand oder durch ein automatisiertes Zuklappen der Schlauchstückenden herstellbar. In der Regel wird Klebstoff verwendet, um das umgeklappte Schlauchende an einer Sackwandung festzulegen beziehungsweise zu fixieren.
Es sind aus der Patentschrift US 6,800,051 B2 auch Kunststoffsäcke mit geklebten Pinchböden bekannt geworden.

Die US 4 373 979 offenbart Schlauchstücke mit einem Glattschnittende, die aus Gewebe bestehen. Die Böden werden durch Herumfalten des Endes und Fixieren mittels Hotmelt und Aufbringen eines Klebestreifen gebildet.

Die WO 2006/125585 A1 offenbart ebenfalls Schlauchstücke mit einem Glattschnittende, die aus Gewebe bestehen. Die Böden werden jedoch durch zweimaliges Umschlagen und dem Aufbringen eines Klebestreifens gebildet, wobei der Boden besondere Maße aufweist.

Die WO 01/05671 A1 offenbart wiederum Schlauchstücke mit einem Glattschnittende, die aus Gewebe bestehen. Hier wird der Boden durch zweimaliges Umschlagen und durch Verkleben oder Verschweißen gebildet. Wie genau das Verschweißen vor sich geht, ist in dieser Druckschrift jedoch nicht offenbart.

Die US 2 274 896 offenbart Schlauchstücke mit einem Glattschnittende, die einen Außensack aus Gewebe und einen Innensack aus Kunststofffolie umfassen. Die Enden werden durch einen Hotmelt-Auftrag und einer Schweißung verschlossen und bilden so einen Boden.

Die US 4 610 651 offenbart eine Vorrichtung zur Herstellung von Pinchsäcken, die eine Element zum Auftragen von Klebstoff und ein Führungsblech zum Umklappen des Schlauchstückendes umfasst.

Die WO 2008/095212 beschäftigt sich im Wesentlichen mit der Erzeugung eines Staffelschnitts zur Herstellung von Schlauchstücken, deren Enden später zu einem Pinchboden verschlossen werden.

In neuerer Zeit ist der Bedarf nach hochwertig bedruckten und außerordentlich stabilen Säcken für den Consumer-Bereich gestiegen. In solchen Säcken soll zum Beispiel Tierfutter abgepackt werden. Sie sollen neben einem für den Consumer-Bereich nötigen ansprechenden Aussehen auch so stabil sein, dass die in Kaufhäusern gestapelten Säcke Kollisionen, zum Beispiel mit Einkaufswagen, aushalten.

Aus den genannten Gründen wird dickes, widerstandsfähiges Material verwendet, um die Säcke zu bilden. Dieses dicke, widerstandsfähige Material erschwert und verteuert jedoch die Bodenbildung. Aufgrund der Rückstellkräfte des Materials gegen die Biegung kann es darüber hinaus dazu kommen, dass sich Böden während des Abbindens des Klebers wieder öffnen, oder dass es an der Klebung zu Qualitätsmängeln kommt. Dies kann insbesondere bei Pinchböden vorkommen, da das Material hier um 180° umgeschlagen wird. Den beschriebenen Qualitätsmängeln versucht man durch eine aufwendige längerfristige Pressung abzuhelfen.

Die Aufgabe der vorliegenden Erfindung besteht daher darin, ein Verfahren, eine Station und eine Vorrichtung vorzuschlagen, mit welchen sich ein Sack herstellen lässt, der aus widerstandsfähigem, aber gut bedrucktem Material besteht und dennoch einen günstig bildbaren Boden aufweist.

Die Aufgabe wird dadurch gelöst, dass die Umfaltung, die an dem zumindest einen Sackende den Pinchboden (55) bildet, hergestellt wird, indem ein Schlauchstück (24) quer zu seiner Längsachse (57) zumindest teilweise durch ein Führungselement (39) geführt wird, wobei das Führungselement (39) doppelwandig ist und das Sackmaterial zwischen seiner Doppelwandung geführt wird, und dass der zumindest eine Pinchboden des Sackes durch einen wärmeinduzierten Fügeprozess festgelegt ist.

Bei solchen Prozessen härtet die Verbindung zwischen Sackwandung und umgeschlagenem Sack- bzw. Schlauchstückende mit der Abkühlung der Säcke aus.

Als wärmeinduzierte Fügeprozesse kommen neben wärmeinduzierten Klebeprozessen - die auch ihre Vorteile haben - unter anderem Siegel- oder Schweißprozesse in Frage. Hierbei kommt beim Siegeln oder thermischen Siegeln eine Verbindung zustande, ohne dass das zu verbindende Kunststoffmaterial zu Schmelze verflüssigt wird. Beim Schweißen wird ein Teil des Kunststoffmaterials zeitweise in Schmelze überführt. Das schnelle Fixieren des Bodens wird noch erleichtert, wenn die Pinchfaltung mit einem Bodendeckblatt abgedeckt wird.

Auch durch eine geschickte Auswahl des Sackmaterials lassen sich erstaunliche Vorteile für die Bodenbildung erzielen. So besitzt gerecktes Material große Festigkeiten, die es erlauben, dünneres Material zu verwenden. Vorteilhaft sind Folienverbünde oder Laminate in diesem Zusammenhang verwendbar, die Polyolefinmaterial, das gute Reckeigenschaften besitzt, enthalten. Besondere Festigkeit besitzen Materialien aus gerecktem Kunststoffgewebe.

Eine sehr vorteilhaft verwendbare Materialzusammenstellung enthält gerecktes Gewebe, auf das mit Hilfe eines Extrudats eine gut bedruckbare Folie aufgeklebt beziehungsweise laminiert wurde.
Vorteilhaft ist es, wenn das Schlauchstück zumindest während eines Teils der Produktion quer zu seiner Längsachse durch die Sackproduktionseinrichtung und insbesondere durch die Station zur Bildung von Pinchböden geführt wird. In der Regel wird dies mit einem Transportsystem geschehen, das unter anderem Transportriemen umfasst.

Vorteilhaft ist es, wenn das Schlauchstück bei der Bodenbildung zumindest mit einem Ende durch ein Führungselement geführt wird. Dieses Führungselement sollte so geformt sein, dass es das eine Ende des Sackes zulegt. Während des Zulegens kann das Schlauchstück vorteilhafterweise beheizt werden. Insbesondere wenn das Führungselement aus Metall ist, kann es beheizt werden und auf diese Weise dem Schlauchstück zumindest einen Teil der Wärmeenergie vermitteln, der zu dem Fügeprozess gebraucht wird.

Vorteilhaft ist die Beheizung mit Heißluft während des Zulegens des Sackendes. Hier kann die Heißluft in die u-förmige Wölbung des Sackmaterials, die sich beim Zulegen bildet, eingeblasen werden und auf diese Weise die Teile der Sackmaterialoberfläche, die aneinander haften sollen, heizen.
Da das Führungselement doppelwandig ausgelegt ist, kann das Sackmaterial in dieser Doppelwand geführt werden. Das Führungselement kann sich in der Transportrichtung der Säcke verjüngen, so dass die Sackwand zusammengelegt wird.

Für die Zwecke dieser Druckschrift wird eine Vorrichtung, die mehrere Arbeitsschritte zur Herstellung von Säcken verrichtet, Vorrichtung zur Herstellung von Pinchsäcken genannt. Eine solche Vorrichtung hat mehrere Bearbeitungsstationen, in denen Arbeitsschritte ausgeführt werden. Solche Vorrichtungen werden oft auch Bodenleger genannt, da die Bodenlegung als ein entscheidender Arbeitsschritt gilt. Für die Zwecke dieser Druckschrift ist die Station zur Bildung von Pinchböden, diejenige Arbeitsstation, die unmittelbar die Pinchböden bildet. Eine solche Arbeitsstation kann eine eigene Transportvorrichtung für Schlauchstücke umfassen. In der Regel wird eine solche Station jedoch von einer Transportvorrichtung durchgriffen werden, die mehreren Bearbeitungsstationen zugeordnet ist.

Weitere Ausführungsbeispiele der Erfindung gehen aus der gegenständlichen Beschreibung und den Ansprüchen hervor.
Die einzelnen Figuren zeigen:
- Fig. 1: Draufsicht auf eine schematische Darstellung einer Vorrichtung zur Herstellung von Säcken
- Fig. 2: Eine Skizze von Elementen einer Bodenbildungsstation
- Fig. 3: Eine Skizze von Elementen einer Bodenbildungsstation und einer Verpressstation
- Fig. 4: Eine weitere Skizze von Elementen einer Bodenbildungsstation und einer Verpressstation
- Fig. 5: Eine schematische Draufsicht auf eine Bodenbildungsstation
- Fig. 6: Eine schematische Draufsicht auf eine weitere Bodenbildungsstation
- Fig. 7: Einen Längsschnitt durch einen Sack
- Fig. 8: Draufsicht auf eine schematische Darstellung einer weiteren Vorrichtung zur Herstellung von Säcken
- Fig. 9: Einen Schnitt durch ein Führungselement entlang der Linie B-B in Figur 5
- Fig. 10: Einen Schnitt durch ein Führungselement entlang der Linie A-A in Figur 9
- Fig. 11: Eine Ansicht eines Sackes von seiner Vorderseite
- Fig. 12: Einen Schnitt durch bevorzugtes Sackmaterial

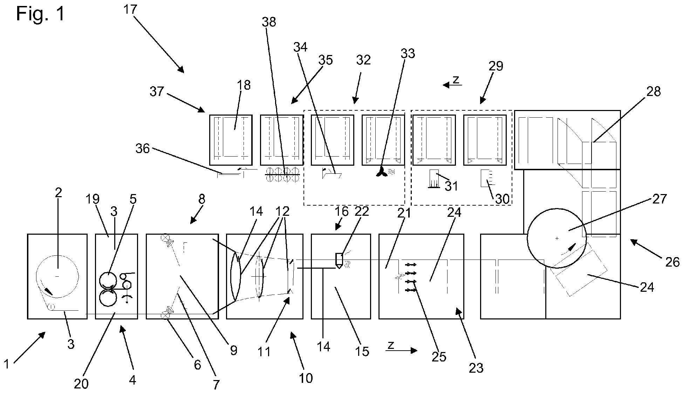

Fig. 1 zeigt eine Draufsicht auf eine schematische Darstellung einer Vorrichtung 17 zur Herstellung von Säcken 18. Die Vorrichtung 17 ist sehr schematisch dargestellt, und oft stellen Symbole die Funktion der jeweiligen Bearbeitungsstation dar. Die Vorrichtung 17 zur Herstellung von Säcken 18 geht bei dem Herstellprozess von einer Materialbahn 3 aus, die in einer Abwickelstation 1 von einem Bahnwickel 2 abgewickelt wird. Der Bahnwickel 2 ist, wie viele andere Symbole, aus darstellerischen Gründen um 90° gedreht dargestellt. Anschließend durchläuft die Bahn 3 einen Vorzug 5 in einer Vorzugsstation 4. Auch das Vorzugssymbol 5 ist um 90° gedreht dargestellt.

Die Bahn 3 gelangt in eine Perforationsstation 8, in der mit Lasern 6, die Strahlen 7 emittieren, Schnitte entlang der Perforationslinie 9 in die Bahn eingebracht werden. Zu vermerken ist also, dass die Perforation vor der Schlauchbildung erfolgt und dass sie hier mit Hilfe von Lasern 6 durchgeführt wird. Es ist auch darauf hinzuweisen, dass die Perforationslinie 9 hier keine Gerade ist. Hierzu später mehr.

Die nunmehr perforierte Bahn 3 gelangt in die Schlauchbildungsstation 10. Anhand der Symbole 12 ist dargestellt, wie sich der Schlauchquerschnitt ausbildet. Natürlich stellen diese Symbole den Querschnitt wieder um 90° gedreht dar. Zu erwähnen bleibt, dass die Bildung eines Schlauches 15 aus einer flachliegenden Bahn 3 erfolgt, indem die Bahn über eine Reihe von Blechen und Rollen geführt wird, wobei seitliche Bereiche der Bahn 3 umgeschlagen werden. Im Bereich der Ränder 19, 20 der Bahn 3, die nun aufeinander liegen, entsteht ein Bereich überlappenden Materials 14. In der gezeigten Vorrichtung werden bei der Schlauchbildung auch Seitenfalten 11 in den Schlauch 15 eingelegt, es werden also Seitenfaltensäcke 18 produziert. Bei dem weiteren Transport in der Transportrichtung z wird in dem überlappenden Materialbereich 14 eine Längsklebung 21 in der Längsklebestation 16 vorgenommen. Dieser Vorgang ist durch ein Extrudersymbol 22 dargestellt. Vorteilhaft ist die Verwendung einer polyolefinischen Schmelze. Die Längsnaht kann jedoch auch durch eine Siegelung oder Schweißung zustande kommen. Schließlich gelangt die Schlauchbahn 15 in eine Abreißstation 23, in der die Bahn Längskräften ausgesetzt wird, so dass die Schlauchbahn 15 zu Schlauchstücken 24 vereinzelt wird. Der Abreißvorgang wird durch die Pfeile 25 symbolisiert. Vorteilhaft ist die Verwendung von Doppelbandförderern zum Abreißen der Schlauchstücke.

Entlang ihrer Längsachsen werden die Schlauchstücke in der Transportrichtung z in die Dreh- und Umlenkstation 26 gefördert, in der die Schlauchstücke 24 gedreht werden, was unter anderem durch den Drehtisch 27 bewirkt wird. Nach der Drehung kann eine Umlenkung erfolgen. Hierbei können die gedrehten Schlauchstücke 24 entlang einer Bahn (z. B. Kurve) umgelenkt werden, was durch das Symbol 28 angedeutet wird. Vorteilhaft ist, wenn eine Drehung um mindestens 90° erfolgt.

In Figur 1 sind nun die Längsachsen der Schlauchstücke quer zu ihrer Transportrichtung z ausgerichtet.
In der Ausrichtstation 29 werden die Schlauchstücke 24 entlang zweier Schlauchstückränder (einmal quer zur Transportrichtung z und einmal parallel dazu) ausgerichtet. Die Symbole 30 und 31 verdeutlichen das.
In der Station 32 zur Bildung von Pinchböden oder Bodenbildungsstation 32 wird ein Ende des Schlauchstücks 24 erwärmt (Symbol 33) und dann die Umfaltung des betreffenden Endes des Schlauchstücks auf die Schlauchwand vorgenommen (Symbol 34). Der so gebildete Boden 62 wird in einer Pressstation 35 festgelegt. Dies geschieht oft in Walzenspalten zwischen Presswalzen (Symbol 38). Die fertigen Säcke 18 werden in einer Ablagestation 37 gestapelt (Symbol 36). Dies geschieht vorteilhafterweise so, dass die Böden der Säcke 18 übereinander liegen.

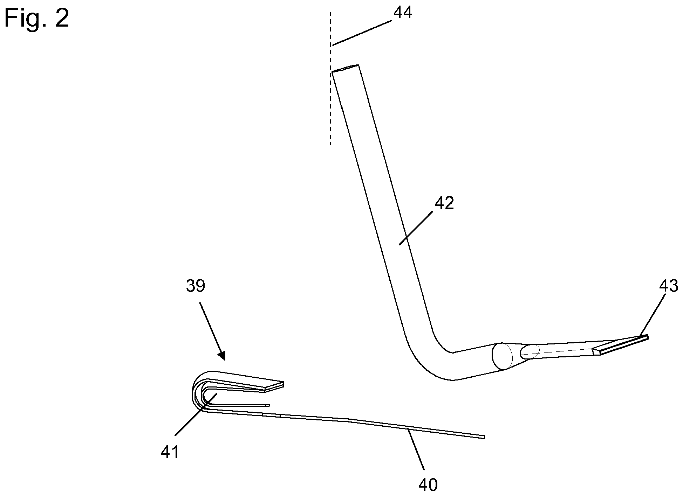

Die Figuren 2 bis 10 skizzieren Teile von Ausführungsbeispielen einer Bodenbildungsstation und von nachfolgenden Pressrollen 38.

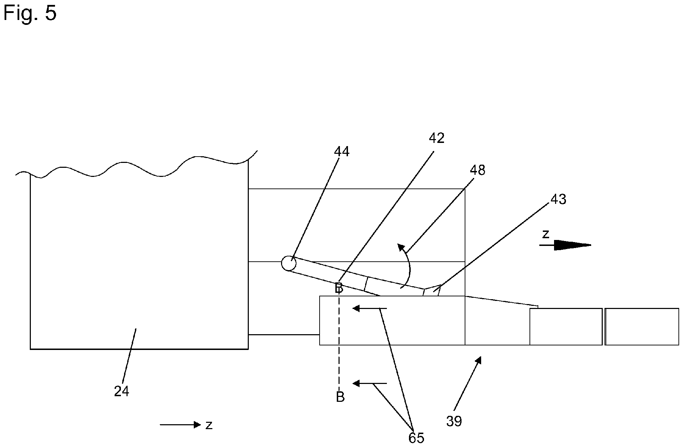

Figur 2 zeigt ein Führungselement 39, das einen u-förmigen ausgestalteten Querschnitt aufweist. Das Führungselement 39 ist doppelwandig und kann zwischen seiner Doppelwandung 45, 46 Sackmaterial führen. Neben dem Führungselement ist der Fördertisch 40 zu sehen. In den Innenraum 41 des Führungselementes 39 kann die Düse 43 eines Heißluftrohres 42 durch eine Drehbewegung (Pfeil 48 in Figur 5) um die Achse 44 geschwenkt werden.

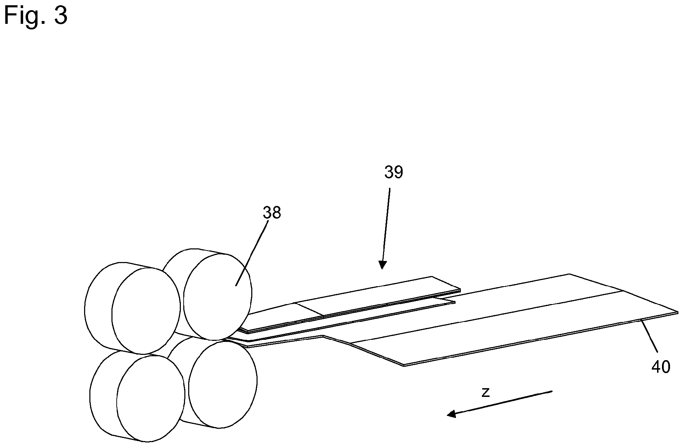

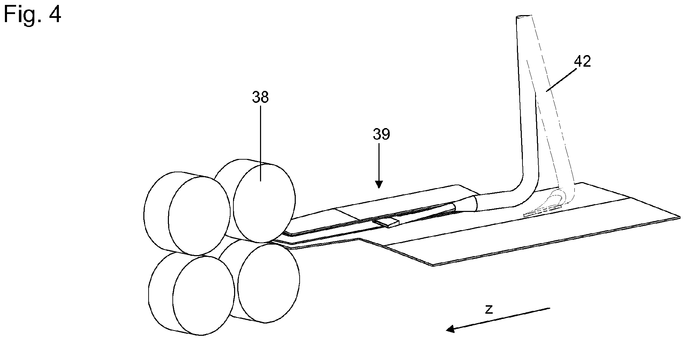

In Figur 3 ist diese Bodenbildungsstation aus einem anderen Blickwinkel zu sehen, wobei die Pressrollen 38 zusätzlich dargestellt sind, während auf die Darstellung des Heißluftrohres 42 jedoch verzichtet wurde. Das Heißluftrohr 42 ist jedoch in Figur 4 sowohl in abgeschwenktem Zustand (gestrichelte Linien) als auch in der Arbeitsstellung (durchgezogene Linien) dargestellt. In dieser Position bläst das Heißluftrohr heiße Luft in den Innenraum 41 des Führungselementes 39.

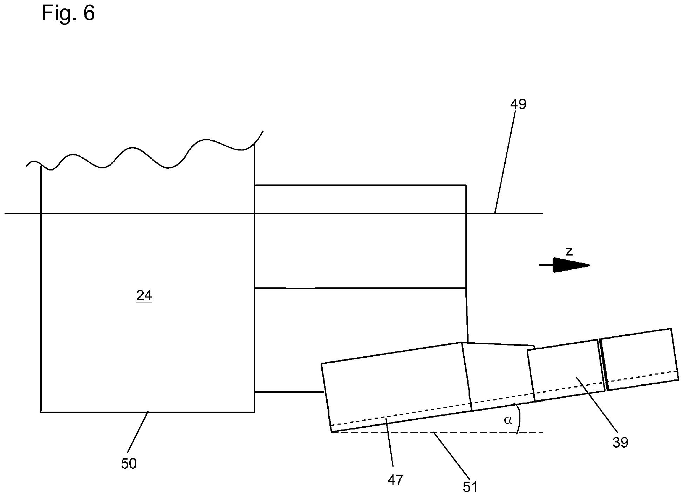

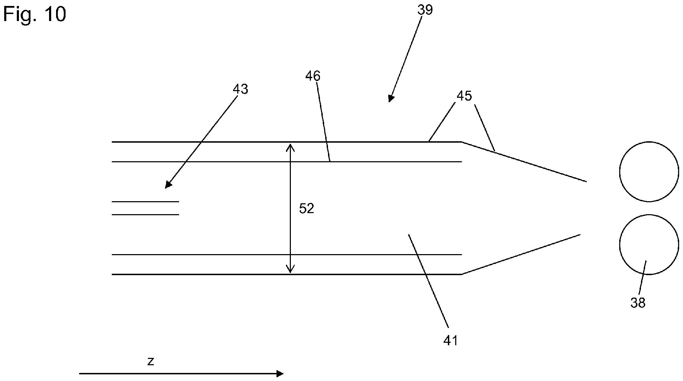

Figur 5 zeigt, wie ein Schlauchstück 24 in Richtung auf das Führungselement transportiert wird. Bei seiner Bewegung auf das Führungselement 39 zu wird das Schlauchstück über den Fördertisch 40 transportiert, wobei die Transportriemen 49 die hierzu nötige Kraft übertragen. Von dem Fördertisch 40 gleitet das Ende 50 des Schlauchstückes in den Bereich zwischen den Wandungen 45 und 46 des Führungselementes. Hier wird das Ende 50 des Schlauchstückes 24 auf die Vorderwand 53 umgeschlagen. Während dieses Prozesses wird das Sackmaterial im Bereich der Faltung durch die Heißluft erwärmt. Um diesen Prozess zu unterstützen, kann die innere Wandung 46 des Führungselements 39 erwärmt werden und oder sie kann mit Ausnehmungen versehen werden, damit die erwärmte Luft das Schlauchmaterial erreichen kann. In der Regel wird die innere Wandung 46 in der Transportrichtung z enden, bevor die äußere Wandung endet (Figur 10). Eine oder beide Wandungen des Schlauchstückes können in der Transportrichtung z trichterförmig zulaufen. Damit wird der Abstand 52 zwischen den Außenwandungen 45 des Führungselements 39 in der Transportrichtung z kleiner. Die Linie 47 ist der am weitesten von der Schlauchmitte 56 entfernte Bereich, in dem das Führungselement 39 (mit seiner Außenwand 45) Sackmaterial führt. Es ist von Vorteil, wenn diese Linie 47 gegen die Transportrichtung z geneigt ist (Transportrichtung dargestellt durch gestichelte Linie 51, Neigung großzügig dargestellt durch Winkel α). Von Vorteil ist oft, das ganze Führungselement 39 zu neigen, wie in Figur 6 zu sehen. In Figur 6 wurde auf die Darstellung des Heißluftrohres 42 verzichtet.

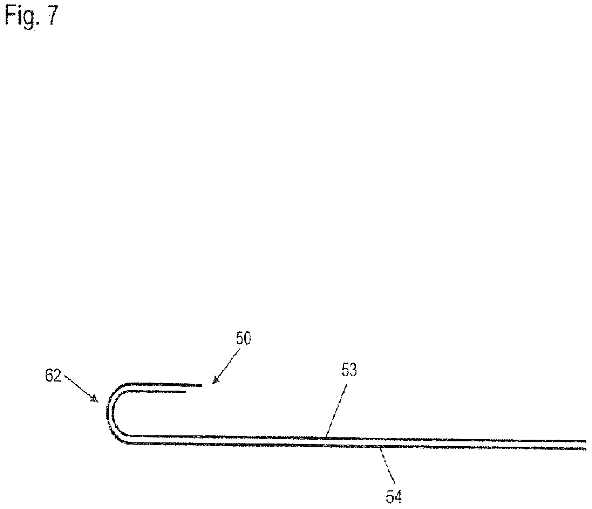

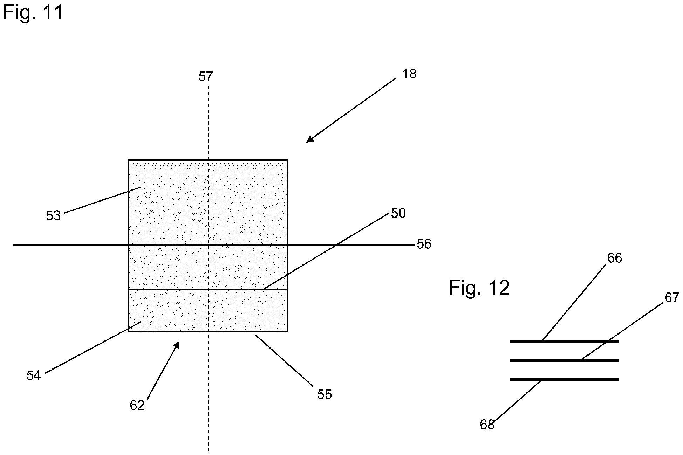

Figur 7 zeigt noch einmal einen Schnitt durch einen Pinchsack 18, bei dem das Ende 50 des Schlauchstückes 24 auf die Vorderwand 53 des Sackes 18 herumgeschlagen ist. Die Faltung erfolgt also um einen Winkel von etwa 180° und bildet hier eine Faltlinie, die zu der Längsachse des Schlauchstücks einen 90° Winkel aufweist. Zu sehen ist auch, dass die herumgeschlagene Vorderwand 53 kürzer ist als die herumgeschlagene Rückwand 54, was durch einen ungeraden Perforationsschnitt 9 (Figur 1) zustande kommen kann. Eine solche Ausführung hat Vorteile. Figur 11 erläutert anhand einer Ansicht eines Sackes 18 von seiner Vorderseite (Vorderwand 53) noch einmal dieselben Gegenstände wie Figur 7. Auch die Sackmitte 56 und die Schlauchsstückachse 57 sind hier erklärt.

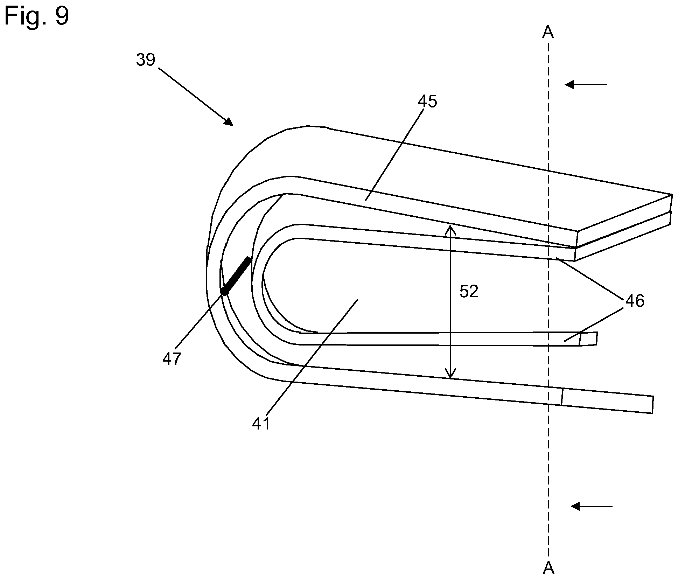

Figur 9 zeigt, wie erwähnt, den u-förmigen Querschnitt des Führungselementes noch einmal detaillierter und verdeutlicht unter anderem die Bedeutung des Abstandes 52 zwischen den Außenwänden 45 des Führungselementes sowie die Bedeutung der Führungslinie 47. Ein solcher Querschnitt ist zu sehen, wenn man das Führungselement 39 in Figur 5 schneidet, aus der durch die Pfeile 65 skizzierten Blickrichtung blickt und die Ansicht auf die Merkmale des Führungselementes 39 reduziert.

Figur 10 zeigt den Schnitt A-A durch das Führungselement 39, in dessen Innenraum 41 die Düse 43 Heißluft einbläst.

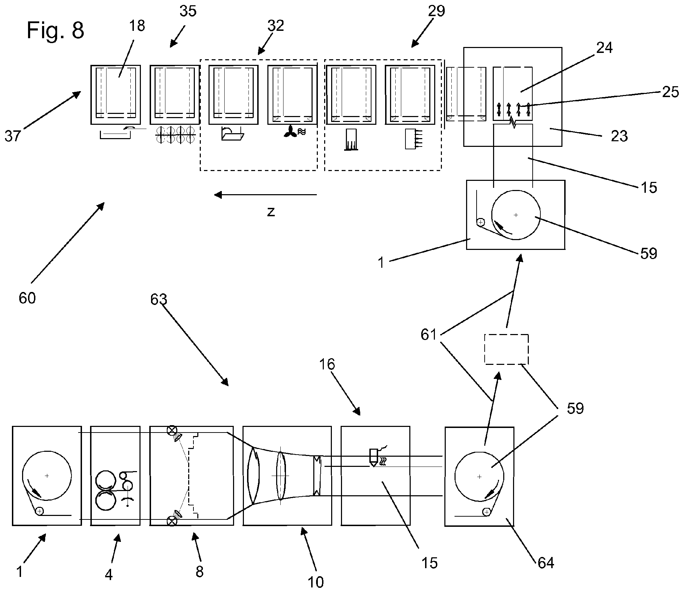

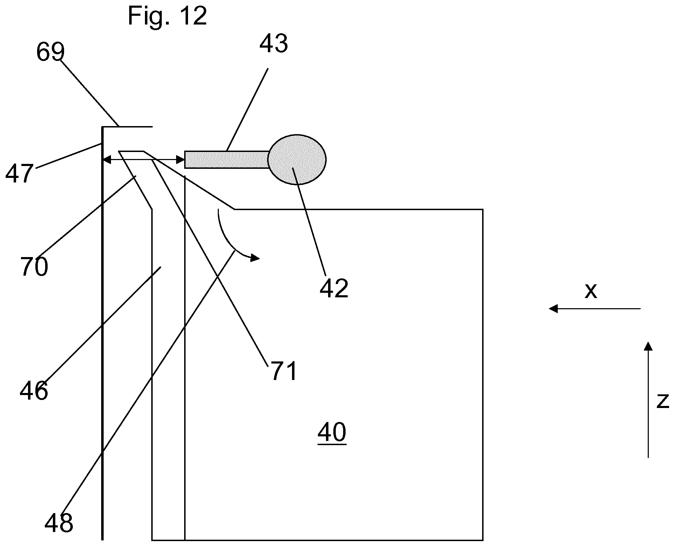

Figur 8 zeigt eine alternative Vorrichtung zur Herstellung von Säcken 18, die aus zwei Vorrichtungsbestandteilen 60 und 63 besteht. Bei dem Vorrichtungsbestandteil 63 handelt es sich um eine Schlauchbildungsanlage 63, deren erste fünf Arbeitsstationen 1, 4, 8, 10 und 16 in ihrer Funktion den gleich nummerierten Arbeitsstationen der Vorrichtung 17 aus Figur 1 entsprechen. Jedoch wird der gebildete Schlauch 15 nach der Längsklebestation 16 in der Aufwickelstation 64 zu einem Schlauchwickel 59 aufgewickelt. Dieser kann - wie durch die Pfeile 61 und den Wickel 59 (gestrichelt) dargestellt - zu der Abwickelstation 1 der weiteren Bodenlegevorrichtung 60 - transportiert werden. Hier wird die Schlauchbahn 15 abgewickelt und gelangt in die Abreißstation 23, in der sie wieder zu Schlauchstücken 24 vereinzelt wird (Pfeile 25). Statt einem Abreißen der Schlauchstücke kommen auch andere Trennungsprinzipien wie Querschneiden in Frage. Der Weitertransport der Schlauchstücke 24 erfolgt in der Transportrichtung z, die quer zu der Abwickelrichtung der Schlauchbahn 15 liegt. Es folgt ein Transport und eine Bearbeitung durch die Stationen 29, 32, 35 und 37, die wiederum die gleichen Funktionen haben wie die gleich nummerierten Stationen der Vorrichtung 17. Figur 12 zeigt einen Schnitt durch bevorzugtes Sackmaterial aus Gewebe 66 (vorzugsweise gerecktes Polyolefingewebe), Extrudat 67 und bedruckbarer Folie 68. In der Regel sind diese Schichten miteinander verbunden und nicht beabstandet. Zwischenschichten - auch aus Papier - können jedoch vorkommen.

Figur 12 zeigt noch einmal die in der Figur 9 gezeigte Innenwand 46 des Führungselements 39 in einer Draufsicht. Von der Außenwand 45 sind lediglich die Seitenführungslinie 47 und die Endlinie 69 dargestellt, um den Blick auf die Innenwand 46 nicht zu behindern. Die Innenwand 46 hat eine Nase 70, das heißt ihr Abstand zu der Außenwand und damit auch zu der Seitenführungslinie verringert sich beziehungsweise sie ist ihr zugeneigt. Dies hat sich als vorteilhaft herausgestellt.

Die Heißluftdüse bläst hier Luft weitgehend orthogonal zur Förderrichtung der Sackhalbzeuge z in den Innenraum 41 des Führungselements 39 ein (in x-Richtung). Dies erfolgt vorteilhafterweise kurz vor oder kurz nach dem Ende der Innenwand in z-Richtung. Vorteilhaft ist hier der Bereich, in dem die Innenwand 46 gerade geendet hat und die Außenwand noch vorhanden ist. "Kurz vor oder kurz nach" heißt in diesem Zusammenhang weniger als 5cm, vorteilhafterweise jedoch weniger als 3 cm. Auch der Abstand zwischen der Führungslinie 47 und dem Ausgang der Düse 43 hat sich als kritisch erwiesen. Vorteilhaft ist hier, wenn er sich auf weniger als 3 cm einstellen lässt. Noch größere Vorteile lassen sich bei einer Einstellbarkeit dieses Abstandes auf 15 bis 5 mm erreichen und wenn nach der Einstellung der genannten Abstände Säcke gefertigt werden.

| **Bezugszeichenliste** | |
|---|---|
| 1 | Abwickelstation |
| 2 | Bahnwickel |
| 3 | Bahn/Materialbahn |
| 4 | Vorzugsstation |
| 5 | Vorzugssymbol |
| 6 | Laser |
| 7 | Strahl |
| 8 | Perforationsstation |
| 9 | Perforationslinie |
| 10 | Schlauchbildungsstation |
| 11 | Seitenfalten |
| 12 | Symbol Schlauchquerschnitt |
| 13 | |
| 14 | Überlappendes Material |
| 15 | Schlauch / Schlauchboden |
| 16 | Längsklebestation |
| 17 | Vorrichtung zur Herstellung von Säcken |
| 18 | Säcke |
| 19 | Rand der Bahn |
| 20 | Rand der Bahn |
| 21 | Längsklebung |
| 22 | Extruder |
| 23 | Abreißstation |
| 24 | Schlauchstücke |
| 25 | Pfeile |
| 26 | Dreh- und Umlenkstation |
| 27 | Drehtisch |
| 28 | Umlenkung |
| 29 | Ausrichtstation |
| 30 | Symbol Ausrichtstation |
| 31 | Symbol Ausrichtstation |
| 32 | Station zur Bildung von Pinchböden |
| 33 | Symbol Heizung |
| 34 | Symbol Faltung |
| 35 | Pressstation |
| 36 | Symbol Ablage |
| 37 | Ablagestation |
| 38 | Pressrollen/Symbol Pressrollen |
| 39 | Führungselement |
| 40 | Tisch |
| 41 | Innenraum Führungselement |
| 42 | Heißluftrohr |
| 43 | Düse |
| 44 | Drehachse |
| 45 | Außenwand Führungselement |
| 46 | Innenwand Führungselement |
| 47 | Seitenführungslinie |
| 48 | Pfeil Drehbewegung |
| 49 | Transportriemen |
| 50 | Ende des Schlauchstücks |
| 51 | Linie |
| 52 | Abstand |
| 53 | Vorderwand |
| 54 | Rückwand |
| 55 | Faltlinie |
| 56 | Schlauchmitte/Sackmitte |
| 57 | Längsachse des Sackes/Schlauchstückes |
| 58 | Aufwickelstation |
| 59 | Schlauchbahnwickel |
| 60 | Weiterer Bodenleger/Vorrichtungsbestandteil |
| 61 | Pfeil (Transport des Schlauchbahnwickels) |
| 62 | Pinchboden |
| 63 | Weitere Bodenlegevorrichtung/Vorrichtungsbestandteil |
| 64 | Aufwickelstation |
| 65 | Pfeile in Blickrichtung der Figur 9 |
| 66 | Gewebe |
| 67 | Extrudat |
| 68 | Folie |
| 69 | Endlinie der Außenwand des Führungselements |
| 70 | Nase der Innenwand des Folienführungselements |
| 71 | Abstand zwischen dem Ausgang der Düse 43 und der Seitenführungslinie 47 |

## Patentansprüche

1. Verfahren zur Herstellung eines Pinchsackes (18) aus Verpackungsmaterial (3),
- wobei der Pinchsack (18) einen Sackkörper aufweist, der im Wesentlichen aus einem Schlauchstück (24) besteht,
- wobei das Verpackungsmaterial (3) zumindest zum Teil aus Kunststoff besteht, und
- wobei zumindest ein Pinchboden (55) des Sackes (18) durch ein Wärmefügeverfahren festgelegt wird
**dadurch gekennzeichnet,**
**dass** die Umfaltung, die an dem zumindest einen Sackende den Pinchboden (55) bildet, hergestellt wird, indem ein Schlauchstück (24) quer zu seiner Längsachse (57) zumindest teilweise durch ein Führungselement (39) geführt wird, wobei das Führungselement (39) doppelwandig ist und das Sackmaterial zwischen seiner Doppelwandung geführt wird.

2. Verfahren nach dem vorstehenden Anspruch,
**dadurch gekennzeichnet, dass**
das Ende (50) des Schlauchstücks (50) auf die Vorderwand (53) des Pinchsacks (18) herumgeschlagen wird, wobei die herumgeschlagene Vorderwand (53) kürzer ist als die herumgeschlagene Rückwand (54).

3. Verfahren nach dem vorstehenden Anspruch,
**dadurch gekennzeichnet, dass**
das zumindest eine Sackende (50) beheizt wird, während es durch das Führungselement (39) geführt wird.

4. Station (32) zur Bildung von Pinchböden (55),
in welcher die Enden von Schlauchstücken umfaltbar und festlegbar sind, umfassend:
- eine Transportvorrichtung (49), mit welcher die Schlauchstücke (24) quer zu ihrer Längsachse (57) transportierbar sind, und
- eine Heizvorrichtung (42), mit welcher (42) das Ende der Schlauchstücke (50) heizbar ist
**gekennzeichnet durch:**
ein Führungselement (39), mit welchem (39) ein Ende der Schlauchstücke (24) bei dem Transport mit der Transportvorrichtung (49) führ- und umfaltbar ist, wobei das Führungselement (39) doppelwandig ist und das Sackmaterial zwischen seiner Doppelwandung führ- und umfaltbar ist.

5. Station (32) nach dem vorstehenden Anspruch,
**dadurch gekennzeichnet, dass**
das Führungselement (39) einen Bereich mit einem im Wesentlichen u-förmigen Querschnitt aufweist.

6. Station (32) nach einem der vorstehenden Ansprüche,
**dadurch gekennzeichnet, dass**
eine oder beide Wandungen des Führungselements trichterförmig zulaufen.

7. Station (32) nach einem der vorstehenden Ansprüche,
**dadurch gekennzeichnet, dass**
die Heizvorrichtung (42) Heizelemente umfasst, mit denen das Führungselement (39) beheizbar ist.

8. Station (32) nach einem der vorstehenden Ansprüche,
**dadurch gekennzeichnet, dass**
die Heizvorrichtung (42) eine Heißluftvorrichtung umfasst, mit welcher Luft in den Bereich (41) des Führungselementes (39) einblasbar ist.

9. Station (32) nach einem der vier vorstehenden Ansprüche,
**dadurch gekennzeichnet, dass**
die Heizvorrichtung (42) eine Heißluftvorrichtung umfasst, mit welcher Luft in den Bereich (41) des Führungselementes (39), der sich zwischen beiden Schenkeln des u-förmigen Querschnitts des Führungselementes (39) befindet, einblasbar ist.

10. Station (32) nach dem vorstehenden Anspruch
**dadurch gekennzeichnet, dass**
die Luft in den Bereich des Führungselementes (39) einblasbar ist, in dem die innere (46) der beiden Wandungen (45,46) endet.

11. Station (32) nach einem der beiden vorstehenden Ansprüche
**dadurch gekennzeichnet,**
**dass** die innere (46) der beiden Wandungen (45,46) in der Transportrichtung (z) der Sackhalbzeuge früher endet als die äußere Wandung (45) und dass die Luft in den Bereich des Führungselementes (39) einblasbar ist, in dem die innere Wandung (46) bereits geendet hat.

12. Station (32) nach einem der fünf vorstehenden Ansprüche
**dadurch gekennzeichnet, dass**
die innere (46) der beiden Wandungen (45,46) an ihrem Ende mit einer Nase (70) versehen ist, die in einer Raumrichtung (x) quer zu der Transportrichtung (z) der Sachhalbzeuge weiter in Richtung auf die äußere Wandung (45) ausgreift als der Rest der inneren Wandung (46).

13. Vorrichtung zur Herstellung von Pinchsäcken (18),
welche folgende Merkmale aufweist:
- eine Perforationseinrichtung (8) zur Querperforation bahnförmigen Materials (3),
- eine Schlauchbildungseinrichtung (11) zur Herstellung eines Schlauches (15) aus einer Materialbahn,
- eine Abreißvorrichtung (23), mit welcher (23) das bahnförmige Material (3) entlang der Perforationsnähte (9) abreißbar ist,
**gekennzeichnet durch**
- eine Abwickelvorrichtung (1) zur Abwicklung einer Materialbahn (3) und
- eine Station (32) nach Anspruch 4.

## Claims

1. A method for the production of a pinch sack (18) from packaging material (3),
- wherein the pinch sack (18) has a sack body, which consists essentially of a hose section (24),
- wherein the packaging material (3) consists at least in part of plastic, and
- wherein at least one pinch bottom (55) of the sack (18) is attached by a thermal joining process
**characterized in**
**that** the folded section, which forms the pinch bottom (55) on the at least one sack end, is produced, in that a hose section (24) is guided transversely to its longitudinal axis (57) at least in part by a guide element (39), wherein the guide element (39) is double-walled and the sack material is guided between its double wall.

2. A method according to the preceding claim,
**characterized in that**
the end (50) of the hose section (50) is wrapped on the front wall of the pinch sack (18), wherein the wrapped front wall (53) is shorter than the wrapped back wall (54).

3. A method according to the preceding claim,
**characterized in that**
the at least one sack end (50) is heated, while it is guided by the guide element (39).

4. A station (32) for formation of pinch bottoms (55),
in which the ends of the hose sections are foldable and attachable, comprising:
- a transport device (49), with which the hose section (24) can be transported transversely to its longitudinal axis (57), and
- a heating device (42), with which (42) the end of the hose section (50) can be heated
**characterized by**:
A guide element (39), with which (39) an end of the hose section (24) can be guided and folded during the transport with the transport device (49), wherein the guide element (39) is double-walled and the sack material can be guided and folded between its double wall.

5. A station (32) according to the preceding claim,
**characterized in that**
the guide element (39) has an area with an essentially u-shaped cross section.

6. A station (32) according to any one of the preceding claims,
**characterized in that**
one or both walls of the guide element taper in a funnel-like manner.

7. A station (32) according to any one of the preceding claims,
**characterized in that**
the heating device (42) comprises a heating element, with which the guide element (39) can be heated.

8. A station (32) according to any one of the preceding claims,
**characterized in that**
the heating device (42) comprises a hot air device, with which air can be blown into the area (41) of the guide element (39).

9. A station (32) according to any one of the preceding claims,
**characterized in that**
the heating device (42) comprises a hot air device, with which air can be blown into the area (41) of the guide element (39), which is located between both legs of the u-shaped cross section of the guide element (39).

10. A station (32) according to the preceding claims,
**characterized in that**
the air can be blown into the area of the guide element (39), in which the inner (46) of the two walls (45, 46) ends.

11. A station (32) according to one of the two preceding claims,
**characterized in,**
**that** the inner (46) of the two walls (45, 46) in the transport direction (z) of the semi-finished sack ends earlier than the outer wall (45)
and **that** the air can be blown into the area of the guide element (39), in which the inner wall (46) has alrearly ended.

12. A station (32) according to one of the five preceding claims,
**characterized in that**
the inner (46) of the two walls (45, 46) is provided on its end with a nose (70), which reaches out in a spatial direction (x) transversely to the transport direction (z) of the semi-finished sack in the direction towards the outer wall (45) further than the rest of the inner wall (46).

13. A device for the production of pinch sacks (18),
which has the following features:
- a perforation device (8) for the transverse perforation of web-shaped material (3),
- a hose forming device (11) for the production of a hose (15) made of a material web,
- a tear-off device (23), with which (23) the web-shaped material (3) can be torn off along the perforation seam (9),
**characterized by**
- an unwinding device (1) for unwinding a material web (3) and
- a station (32) according to Claim 4.

## Revendications

1. Procédé de fabrication d'un sac à fond pincé (18) constitué d'un matériau d'emballage (3),
- le sac à fond pincé (18) comprenant un corps de sac, qui est constitué globalement d'un tronçon de tuyau (24),
- le matériau d'emballage (3) étant constitué au moins en partie de matière plastique et
- au moins un fond pincé (55) du sac (18) est défini par un procédé de jonction thermique
**caractérisé en ce que**
le pli qui forme le fond pincé (55) au niveau d'au moins une extrémité du sac est réalisé en guidant un tronçon de tuyau (24) transversalement par rapport à son axe longitudinal (57) au moins partiellement à travers un élément de guidage (39), l'élément de guidage (39) présentant une double paroi et le matériau du sac étant guidé entre des deux parois.

2. Procédé selon la revendication précédente,
**caractérisé en ce que**
l'extrémité (50) du tronçon de tuyau (50) est repliée sur la paroi avant (53) du sac à fond pincé (18), la paroi avant (53) repliée étant plus courte que la paroi arrière (54) repliée.

3. Procédé selon la revendication précédente,
**caractérisé en ce que**
au moins une extrémité du sac (50) est chauffée tandis qu'il est guidé à travers l'élément de guidage (39).

4. Station (32) pour la formation de fonds pincés (55),
dans laquelle les extrémités de tronçons de tuyaux peuvent être pliées et fixées, comprenant :
- un dispositif de transport (49), avec lequel les tronçons de tuyaux (24) peuvent être transportés transversalement par rapport à leur axe longitudinal (57) et
- un dispositif de chauffage (42), avec lequel (42) l'extrémité des tronçons de tuyaux (50) peut être chauffée,
**caractérisée par** :
un élément de guidage (39), avec lequel (39) une extrémité des tronçons de tuyaux (24) peut être guidée et repliée lors du transport avec le dispositif de transport (49), l'élément de guidage (39) présentant une double paroi et le matériau du sac pouvant être guidé et replié entre ses deux paroi.

5. Station (32) selon la revendication précédente,
**caractérisée en ce que**
l'élément de guidage (39) comprend une zone avec une section transversale globalement en forme de U.

6. Station (32) selon l'une des revendications précédentes,
**caractérisée en ce que**
une ou deux parois de l'élément de guidage se rejoignent à la manière d'un entonnoir.

7. Station (32) selon l'une des revendications précédentes,
**caractérisée en ce que**
le dispositif de chauffage (42) comprend des éléments de chauffage avec lesquels l'élément de guidage (39) peut être chauffé.

8. Station (32) selon l'une des revendications précédentes,
**caractérisée en ce que**
le dispositif de chauffage (42) comprend un dispositif à air chaud, avec lequel de l'air peut être soufflé dans la zone (41) de l'élément de guidage (39).

9. Station (32) selon l'une des quatre revendications précédentes,
**caractérisée en ce que**
le dispositif de chauffage (42) comprend un dispositif à air chaud, avec lequel de l'air peut être soufflé dans la zone (41) de l'élément de guidage (39), qui se trouve entre les deux montants de la section en forme de U de l'élément de guidage (39).

10. Station (32) selon la revendication précédente,
**caractérisée en ce que**
l'air peut être soufflé dans la zone de l'élément de guidage (39) dans laquelle se termine la paroi interne (46) des deux parois (45, 46).

11. Station (32) selon l'une ou les deux revendications précédentes,
**caractérisée en ce que**
la paroi interne (46) des deux parois (45, 46) dans le dispositif de transport (z) des sacs semi-finis se termine plus tôt que la paroi externe (45) et **en ce que** l'air peut être soufflé dans la zone de l'élément de guidage (39) dans laquelle la paroi interne (46) est déjà terminée.

12. Station (32) selon l'une des cinq revendications précédentes,
**caractérisée en ce que**
la paroi interne (46) des deux parois (45, 46) est munie à son extrémité d'un embout (70) qui s'étend dans une direction spatiale (x) transversale par rapport à la direction de transport (z) des sacs semi-finis plus loin vers la paroi externe (45) que le reste de la paroi interne (46).

13. Dispositif de fabrication de sacs à fonds pincés (18),
qui comprend les caractéristiques suivantes :
- un dispositif de perforation (8) pour la perforation transversale d'un matériau en forme de bande (3),
- un dispositif de formation de sac (11) pour la fabrication d'un tuyau (15) à partir d'une bande de matériau,
- un dispositif de déchirement (23) avec lequel (23) le matériau en forme de bande (3) peut être déchiré le long de la série de perforations (9),
**caractérisé par**
- un dispositif de déroulement (1) pour le déroulement d'une bande de matériau (3) et
- une station (32) selon la revendication 4.
